# EUROPEAN PATENT APPLICATION

(11) **EP 1 518 513 A1**
(43) Date of publication of application: **30.03.2005**
(21) Application number: 04016075.6
(22) Date of filing: 08.07.2004
(51) Int. Cl.: A61C 19/00

(54) **Apparatus for polymerisation of composite resins, in particular composite resins for dental fillings**

(30) Priority: 24.09.2003 IT GE20030075
(71) Applicant: Benedicenti, Alberico, I-16128 Genova (IT)
(72) Inventor: Benedicenti, Alberico, I-16128 Genova (IT)
(74) Representative: Porsia, Attilio, Dr.

(57) **Abstract**

Apparatus for the in situ polymerisation of composite resins serving to irradiate the monomer material with a ray of infrared laser light to which is added in a short space of time a further light beam which propagates around said ray. This light is non-coherent; the source of the said light is a light emitting diode having a wavelength of 450-480 nm.

## Description

### OBJECT OF THE INVENTION

This invention relates to a method for the in situ polymerisation of synthetic materials and in particular relates to a method for the polymerisation of composite materials for dental fillings.

### BRIEF DESCRIPTION OF THE STATE OF THE ART

Composite resins for dental use which polymerise through the action of a light beam which stimulates the activation of a photoinitiator have been known for a long time.

Various types of light sources have been used with different monomer/photoinitiator systems, substantially in order to render the process as effective as possible.

A particular problem arises from the fact that in many of these processes polymerisation initiates in the outermost layers of the material and then gradually penetrates inwards (this is because the light is hot and therefore also radiates heat). This fact renders the filling performed on teeth unreliable, given that when the composite polymerises at the base there is a shrinkage tension which causes detachment from the walls at the edges of the said composite, as a result of which anchoring of the same is somewhat compromised. In order to overcome this problem it has been envisaged that light beams having a greater penetrating capacity might be used, that is beams which are capable of effectively acting in the base of the cavity undergoing filling.

Italian patent application No. 3550-A/83 describes the use of a central laser light beam typically of a wavelength of 904 nm or in any event within the infrared which makes it possible to achieve reliable polymerisation of self-polymerising synthetic materials at depth, in particular when applied in the dental field. When applied to a cavity filled with self-polymerisable resin the laser light beam passes through the mass of the resin and is absorbed by the base of the cavity generating heat, and is partly diverted into the cavity wall and absorbed by that wall, again also generating heat. The heat produced catalyses the polymerisation reaction, which starts from the base of the cavity.

This process has however proved to be ineffective with photochemically polymerising resins which up to now have been exposed to radiation using halogen light. A solution to this problem was provided in Italian patent no. 1217146 in the name of the same author, in which a process for the in situ polymerisation of composite materials is described in which the material is irradiated with a laser beam surrounded by another light beam; the said additional light beam is of a non-coherent nature and preferably comprises light emitted by a halogen lamp. This process ensures a high polymerisation yield and makes it possible to avoid shrinking phenomena at the margins of the treated cavity.

The use of a halogen lamp nevertheless presents some disadvantages; first it dissipates a considerable amount of power in surface heat, and the equipment which has to be installed therefore requires efficient cooling means. In addition to this the beam of radiation generated has a very wide spectrum, and various filters have to be used (filters to cut out the frequencies corresponding to the infrared and filters to select the frequencies lying between approximately 400 and 500 nm respectively), both to cool the radiation and to reduce the spectrum width.

### DESCRIPTION OF THE INVENTION

The purpose of this invention is to provide a method for the in situ polymerisation of composite materials which combines the use of a source of light radiation with low energy dissipation as heat, of small size, and which is capable of emitting visible radiation within an extremely narrow wavelength range lying within the interval between 410 and 500 nm, and which is cold, that is without any heat due to irradiation, with the technology in the abovementioned patent.

The subject matter of this invention is therefore a method for the in situ polymerisation of composite materials in which the material is irradiated with a beam of laser light of infrared frequency in the central position and simultaneously or shortly afterwards with a further beam of light which propagates around the said central laser light beam and comprises non-coherent light. The source of the said additional light is a diode emitting cold light of a wavelength between 450 and 480 nm.

Further advantages and features of the method according to this invention will be indicated by what follows below.

The use of a light emitting diode (hereinafter LED) provides many advantages in implementing the method according to the invention; in fact the equipment which is used to implement the method can be of extremely small dimensions. In addition to this, given that LED have absolutely hardly any power consumption in comparison with conventional halogen lamps, cooling of the equipment is effectively unnecessary, or in any event very much simpler to carry out. Above all the light emitted is virtually free from heat.

In particular, LEDs available on the market, which have a power consumption of the order of 500/600 mW, capable of emitting substantially blue light radiation with an emission spectrum having a very narrow peak between 450 and 480 nm, and therefore capable of initiating polymerisation through a chemical effect, were considered in the development of the method according to the invention.

This emission spectrum makes it possible to avoid the use of filters in the equipment, and therefore makes the method according to the invention even more simple and effective. In addition to this it can be implemented using simpler means which ensure that the equipment is more compact. Miniaturisation of the sources and the simplicity of their cooling makes the method according to the invention very much easier and more applicable, while keeping all its advantages.

The field of application of the invention may be summarised as follows:
it comprises a method which is suitable for optimising the polymerisation of composite resins placed in a cavity of a human tooth comprising surface enamel and dentine, and the walls and base of the cavity. The dentine is of a brown colour and absorbs 90% of the infrared radiation of the laser light which instead passes through the composite material without giving out heat in a radiating cone determined by a ray divergence of + or - 6° and a scattering effect through the action of the composite resin filling. The base of the infrared cone comprises dentine which therefore absorbs the laser beam, increasing its temperature by approximately 2°, and this catalyses the polymerisation which in the meantime is induced by the blue 470-480 nm light emitted by the diode. This allows controlled polymerisation starting from the hottest point, which is the base of the cavity, to take place and this prevents the existence of tension forces in the surface part which, not yet being polymerised, is able to adapt to the cavity walls. The technical procedure is described in detail in the figures on plate 1 of the appended drawings.

### BRIEF DESCRIPTION OF THE DRAWINGS

In the drawings:
Figures 1 and 2 illustrate diagrammatically the stages of the hardening of a composite resin irradiated with normal halogen light within a tooth cavity,
Figures 3A and 3B illustrate the subsequent stages of polymerisation through an infrared diode (3A) and a cold light LED (3B),
Figures 4A, 4B and 4C illustrate the subsequent stages of polymerisation through an infrared laser light and a LED cold light, and
Figure 5 illustrates diagrammatically an embodiment of equipment for implementing the method according to the invention.

### DESCRIPTION OF THE POLYMERISATION PROCEDURE

In the drawings in plate 1, 1 indicates the tooth which is to be filled, and 2 indicates the composite material.

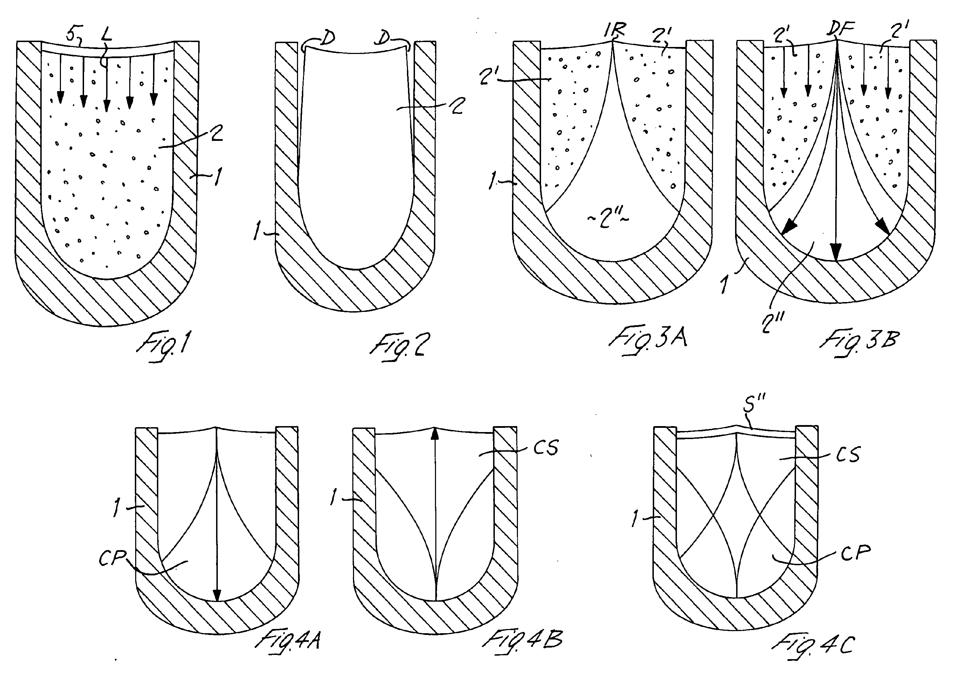

With reference now to Figure 1, it will be seen that when irradiating with normal halogen light L the incoherent light is absorbed together with heat by the surface layers S of the composite.

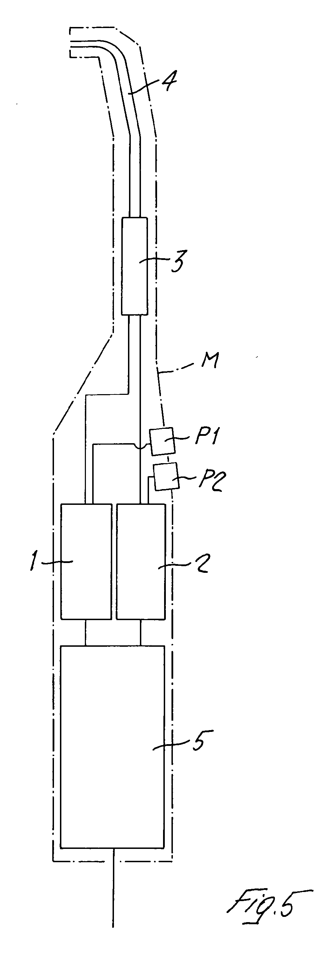

Polymerisation therefore starts from the surface of the composite. When the halogen light reaches the deeper layers (Figure 2), the surface layers have already polymerised and are therefore rigid, and the physical chemical shrinkage which takes place between the monomer and polymer is taken up by the mass of the composite causing detachment D of the surface layers from the walls or the base of the cavity.

In controlled polymerisation (Figure 3A) on the other hand the infrared laser beam IR passes through fluid composite 2' as if it was window glass, because of its wavelength, and is therefore wholly absorbed by the base of the cavity which is dentine, which absorbs 98% of a 800-900 nm infrared wavelength and becomes heated, with a preset power, by between 1 or 2°C, catalysing the polymerisation process, as shown by composite 2" which is undergoing polymerisation, and cannot harm the dental pulp. It is for this reason that a gallium arsenide laser diode, which guarantees the desired effect at minimum cost, is preferably used.

At this point (Figure 3B) the mass of composite in the cavity is irradiated using a cold light diode DF (450-480 nm) and the composite 2" which is closest to the bottom is the first to polymerise in that it is "hot at the wall", that is it has been previously heated by the infrared laser. There is therefore a primary cone of polymerisation while the rest of the composite which is still fluid is capable of adapting to the walls perfectly. A LED diode is preferably used because this is capable of producing cold light at a very low cost (below that of a blue laser).

At this point, once the primary cone has polymerised (Figure 4A), there is partial reflection of the infrared laser light (Figure 4B) which is coherent and is irradiated from a 100 µm fibre, and is therefore point-like, towards the walls of the cavity, whose temperature increases, with the formation of a secondary cone CS, and being simultaneously irradiated by 450-480 nm LED light initiate polymerisation of the walls guaranteeing perfect bonding at the edges. The shrinkage will be taken up within the mass of the composite in a lenticular manner, thus reducing the free surface area of the resin which is the only part thereof which is not heated in that it is totally free from dentine, the tissue absorbing coherent infrared radiation. Because of the interaction between the two polymerisation cones CP and CS (Figure 4C) the composite will sink by an amount equal to the shrinkage in its free surface, as illustrated by the new "seal line" S" in Figure 4C.

In conclusion we can state that:

The polymerisation of composite resins using halogen light causes shrinkage of the composite with a consequent marginal gap and secondary infiltration of the filling.

The author has developed a method which makes use of infrared laser light associated with cold light within the range 450-480 nm to bring about laser light-guided polymerisation of the composite materials used to produce dental fillings.

The method has made it possible to cause polymerisation to start from the base of the prepared tooth cavity thus first producing a polymerisation cone starting from the base of the cavity. This makes it possible to induce shrinkage only by lowering the level of the composite, with the latter forming a seal with the edges of the cavity.

Experimental tests have demonstrated that the composite thus polymerised on average
- absorbs 25% less water (evaluation by microweighing)
- has a hardness of 10% more than that brought about by 96 to 98% polymerisation (evaluated using a Galileo A200 hardness meter)
- suffers less percentage wear and therefore has a greater resistance to wear (evaluated using the Mohr-Federhaff machine and the pin and ring method)
- finally three-dimensional evaluation of the marginal gap by Bohr's method has made it possible to establish the wall adhesion of the composite to the tooth wall confirming the absence of any marginal gap and improved wall adhesion.

Finally we have evaluated the various shrinkage lines of the composite using a holographic method on a sample, and we succeeded in real time in showing that contrary to what occurs with halogen light (centre/marginal shrinkage) there was top to bottom shrinkage with the proposed method.

This being the case, from the clinical point of view it is possible to summarise as follows:
1) the composite polymerised by a waveguide laser absorbs less H₂O and therefore should from the clinical point of view guarantee greater stability and less chromatic variation,
2) the composite polymerised using a waveguide laser is slightly harder, but this should not adversely affect plasticity characteristics,
3) the composite polymerised using a waveguide laser has greater resistance to wear and therefore clinically should have a longer service life
4) the composite polymerised by a waveguide laser has greater adhesion to both the enamel and the dentine, and therefore from the clinical point of view there should be no marginal cracks and secondary infiltration should be impossible.

### DESCRIPTION OF A DEVICE FOR PRACTICAL IMPLEMENTATION OF THE METHOD

Figure 5 illustrates one embodiment of a device for implementing the method according to the invention, purely by way of a non-restrictive example.

With reference to the said figure, M indicates the perimeter of a handle capable of containing the components of the portable equipment according to the invention. A battery 5, for example a rechargeable lithium battery, is housed within handle M. 1 indicates a 450-480 nm LED diode coupled to a 600 nm fibre and 2 indicates an infrared 810 nm laser diode connected to a 100 µm fibre. Both these diodes are powered by battery 5, and can be activated by pressing push buttons P1 and P2. 3 indicates an optical system with an annular wave guide between 470 nm and 810 nm and a central laser connected to diodes 1 and 2 respectively, while 4 indicates a bundle of interchangeable fibres. This bundle may for example have cross-sectional diameters of between 2 and 9.9 mm, depending upon the specific dental purpose for which it is intended, and for example 2 mm for filling the point of contact between teeth, 7 mm for fillings on the vestibular and palatal surfaces of various teeth and 9.9 mm for the occlusal surfaces of the molars.

The operation of the device described will be obvious. By first pressing on push button P2 the mass of composite is irradiated with the light from infrared laser diode 2 for a few seconds, of the order of 2 to 6 seconds, implementing the first stage of the process (Figure 3A). Push button P1 is then pressed, simultaneously irradiating the mass of composite through cold light diode 1, implementing the stages previously described with reference to Figures 3B and 4A to 4C, until polymerisation of the composite present in the tooth cavity is completed with formation of the seal S".

Of course this invention is not limited to the embodiment of the equipment described, which is provided purely by way of example, but includes all those variants and modifications which fall within the scope of the inventive concept substantially as claimed below.

## Claims

1. Method for the in situ polymerisation of composite materials **characterised in that** the monomer composite material is first briefly irradiated with a laser light beam of wavelength 800-910 nm which is shortly afterwards associated with a peripheral beam of cold non-coherent light having a wavelength of 450-480 nm.

2. Method according to claim 1, in which the said laser light beam in the infrared frequency located in the central position is initially activated for a time of 2 to 6 seconds, after which the said peripheral beam of non-coherent cold light is attached.

3. Method according to the preceding claims, in which the source of the said non-coherent cold light is a light emitting LED.

4. Method according to claim 3, in which the said light emitting LED emits blue radiation in a wavelength range between 450 and 470 nm.

5. Method according to claims 3 or 4, in which the said LED consumes power of the order of 500-600 mW.

6. Device for implementing the method according to claims 1 to 5 above, **characterised in that** it comprises: an enclosure (M) housing an electric battery (5); an LED diode (1); a laser diode (2); the said diodes (1 - 2) being powered by the said battery (5) with intermediate push button switches (P1, P2); and a wave guide optical system comprising a central system coupled to the said laser diode (2) and an annular peripheral system coupled to the said LED diode (1) which conduct the said radiation to the outside of the said housing through optic fibre bundles (4).

7. Device according to claim 6, in which the said LED diode (1) is a cold light diode in the range 450-480 nm.

8. Device according to claim 6 in which the said laser diode (2) is an infrared radiation diode in the range 800-900 nm.

9. Device according to claim 8, in which the said laser diode (2) is a gallium arsenide diode.

10. Device according to claim 6, in which the said optic fibre bundles (4) comprise bundles of 100-200 micron optical fibres bonded to each other with adhesive.

11. Device according to claim 10, in which the said optical fibre bundles (4) are interchangeable and have different diameters in cross-section varying from 2 to 10 mm depending upon the dental purpose for which they are intended.

12. Device according to any one of claims 6 to 11, **characterised in that** it comprises an optical collimation and focussing system (3) which delivers the infrared light to the centre and the blue light peripherally in a ring around the said fibre bundle (4).
